## Europäisches Patentamt
## European Patent Office
## Office européen des brevets

(19)

(11) Numéro de publication: **0 121 457**
**B1**

(12) # FASCICULE DE BREVET EUROPEEN

(45) Date de publication du fascicule du brevet:
**17.09.86**

(51) Int. Cl.⁴: **C 08 L 67/02**, F 21 V 7/22

(21) Numéro de dépôt: **84400431.7**

(22) Date de dépôt: **05.03.84**

(54) **Réflecteurs de projecteurs pour véhicules automobiles fabriqués par moulage par injection selon le procédé à deux composants en poly(alkylène téréphtalate).**

(30) Priorité: **07.03.83 FR 8303684**

(43) Date de publication de la demande:
**10.10.84 Bulletin 84/41**

(45) Mention de la délivrance du brevet:
**17.09.86 Bulletin 86/38**

(84) Etats contractants désignés:
**AT BE CH DE FR GB IT LI LU NL SE**

(56) Documents cités:
**EP - A - 0 043 797**
**US - A - 4 250 078**

(73) Titulaire: **CIBIE PROJECTEURS, 17, rue Henri Gautier, F-93012 Bobigny (FR)**
Titulaire: **CHEMISCHE WERKE HÜLS AG, - RSP Patente / PB 15 - Postfach 13 20, D-4370 Marl 1 (DE)**

(72) Inventeur: **Baciu, Antoine, 5, Cours d'Orléans, F-27940 Anbevoye (FR)**
Inventeur: **Jadamus, Hans, Dr., Hervester Strasse 8, D-4370 Marl (DE)**
Inventeur: **Bittscheidt, Josef, Schillerstrasse 70, D-4370 Marl (DE)**

(74) Mandataire: **Martin, Jean-Jacques et al, Cabinet REGIMBEAU 26, Avenue Kléber, F-75116 Paris (FR)**

**Description**

La présente invention concerne les réflecteurs de projecteurs pour véhicules automobiles fabriqués par moulage par injection selon le procédé à deux composants en poly(alkylène téréphtalate) à nombre de viscosité (DIN 16 779) situé entre 60 et 180 cm³/g.

Jusqu'à présent, les réflecteurs de projecteurs pour véhicules automobiles sont habituellement fabriqués en tôle par emboutissage. Après cette opération, sont appliqués une couche de vernis et un dépôt d'aluminium vaporisé sous vide assurant la fonction réfléchissante. En raison des possibilités limitées du façonnage, ces réflecteurs de projecteurs actuellement en usage n'offrent qu'un nombre relativement faible de formes géometriques simples.

Les automobiles modernes rendent de plus en plus nécessaires des réflecteurs de projecteurs à géométrie compliquée. Il n'est plus possible de fabriquer de façon rentable de tels réflecteurs de projecteurs pour véhicules automobiles à partir de tôle.

De telles pièces ne peuvent être façonnées qu'en des matières thermodurcissables ou, selon le cas, thermoplastiques. Cependant, les possibilités d'utilisation de ces matériaux restent faibles si des mesures complémentaires ne sont pas prises.

Les réflecteurs de projecteurs pour véhicules automobiles en matières plastiques thermodurcissables n'offrent pas la surface polie nécessaire à un bon rendement optique. C'est pourquoi des opérations complémentaire doivent être effectuées avant l'application de la couche réfléchissante, par exemple l'application d'une couche intermédiaire.

Par contre, les thermoplastiques, dans la mesure où ils ne sont pas renforcés, permettent d'obtenir des réflecteurs pour véhicules automobiles à surface polie. Sous l'influence d'une source de lumière chaude, les pièces ont tendance à se dilater et se déformer de telle sorte que la direction légalement prescrite du faisceau lumineux est modifiée pendant le service dans une proportion intolérable. Le cahier des charges TRANS/SC1/WP29/R184 définit les variations tolérables de l'orientation d'un faisceau lumineux.

La solution actuellement la plus favorable du point de vue économique et technique, mais cependant d'utilisation limitée, convenant par exemple aux réflecteurs paraboliques de révolution, est celle qu'offre le moulage par injection de thermoplastiques comme les poly(alkylène téréphtalates) incorporant des additions qui améliorent la stabilité dimensionnelle de la pièce à travailler, sans pour autant nuire à la qualité de surface. De telles additions sont décrites entre autres dans les demandes publiées DE 2 910 643 ou EP 0 043 797. Mais elles ne peuvent être utilisées que dans la mesure où la qualité de surface n'est pas modifiée de manière défavorable. La résistance à la chaleur de tels réflecteurs de projecteurs pour véhicules automobiles est donc nécessairement limitée.

Les réflecteurs de projecteurs pour automobiles décrits ci-dessus peuvent faire face aux exigences du cahier des charges lors de l'utilisation d'ampoules bilux (Code Européen - réglement ECE N° 2). Mais, les ampoules à halogène (réglements ECE N° 8 et N° 20), qui sont préférées en raison de leur rendement supérieur d'éclairage et de leur plus grande longévité, ne peuvent pas être utilisées: la stabilité dimensionnelle des matériaux utilisés est insuffisante aux hautes températures produits par de telles sources lumineuses.

En principe, il est possible de renforcer les matériaux indiqués ci-dessus, per exemple par des additions particulièrement efficaces comme les fibres de verre ou de carbone, jusqu'à ce qu'ils présentent une stabilité dimensionnelle à la chaleur suffisante. Mais, dans ce cas, la surface des réflecteurs laisse à désirer de telle sorte qu'une réfexion parfaite est aussi difficile à obtenir que pour des matières thermodurcissables. En outre, lorsqu'elle est retirée de l'empreinte du moule, la pièce moulée subit déjà une déformation inadmissible en raison de phénomènes de contraction anisotrope.

Enfin, on sait obtenir des réflecteurs de projecteurs pour véhicules automobiles à surface polie à partir des matériaux thermoplastiques indiqués, qui sont pourvus d'une peau en thermoplastique généralement non renforcée, obtenue au moyen du procédé appelé procédé à deux composants ou procédé par moulage sandwich par injection. Mais, ce procédé n'est lui non plus, pas susceptible d'éliminer la tendance à la déformation déjà décrite.

Le problème résolu par la présente invention est d'éviter les inconvénients connus dans l'état de la technique.

Le problème posé a pu être résolu par l'utilisation d'une couche de noyau composée de poly(alkylène téréphtalate) comportant de 15 à 75% en poids, de préférence de 30 à 60% d'hématite, ce pourcentage en poids étant relatif au mélange total.

Les poly(alkylène téréphtalates) préférentiels sont le poly(éthylène téréphtalate) et le poly(butylène téréphtalate). Le poly(éthylène téréphtalate) offre l'avantage d'une meilleure stabilité dimensionnelle à la chaleur, le poly(butylène téréphtalate) l'avantage d'une aptitude au formage économique.

Les poly(alkylène téréphtalates) ont un nombre de viscosité (DIN 16 779) situé entre 60 et 180 cm³/g.

Les masses molaires des poly(alkylène téréphtalates utilisés pour le noyau et la peau sont en général de même valeur. Au cas où ces masses molaires seraient de valeurs différentes, la masse molaire du polyester utilisé pour la peau devrait avoir une valeur supérieure à celle du polyester utilisé pour le noyau.

L'homopoly(éthylène téréphtalate) ou, selon le cas, l'homopoly(butylène téréphtalate) sont utilisés en général. Particulièrement en ce qui concerne les polyesters qui constituent la peau il est possible de remplacer un pourcentage molaire allant jusqu'à 10% de l'acide téréphtalique par d'autres acides dicarboxyliques tels que l'acide isophtalique, l'acide sébacique, l'acide azélaïque, l'acide dodécanedioïque, ou analogues et un pourcentage molaire allant jusqu'à 10% de l'éthylène glycol ou, selon le cas, du butylène glycol ajouté par d'autres diols tels, entre autres, que le cyclohexane diméthanol-1-4 ou le néopentyl glycol.

La matière de remplissage (charge) utilisée selon l'invention pour le poly(alkylène téréphtalate) du noyau est l'hématite qui compose de 15 à 75%, de préférence de 30 à 60% — pourcentage en poids — du mélange total. Au moins 75% de l'hématite utilisée selon l'invention doit avoir une dimension particulaire (passage au tamis) < 70 μm. De préférence, sont utilisées des hématites dont au moins 90% des particules ont une dimension particulaire < 70 μm. Les hématites généralement en vente dans le commerce comportent environ de 85 à 90% en poids de $Fe_2O_3$, le reste étant formé de composés oxydés de silicium d'aluminium, de calcium et de magnésium.

Outre la matière de remplissage hématite résultant de l'invention, d'autres matières de remplissage peuvent être utilisées: les fibres de verre, les microbilles, le mica, la craie, la kaolin, le talc, le graphite, etc... Les autres matières de remplissage peuvent remplacer jusqu'à 25% de l'hématite mais à condition que le mélange total de poly(alkylène téréphtalate) et de matière de remplissage comporte au moins 15% en poids d'hématite.

Le poly(aklylène téréphtalate) utilisé pour la peau peut être mélangé à des matières de remplissage dans la mesure où la qualité de surface n'est pas altérée. Un exemple de matière de remplissage appropriée est le dioxyde de titane de préférence en quantité allant jusqu'à 30% en poids du mélange total.

Selon une forme d'exécution générale, les poly(alkylène téréphtalates) destinés à la fabrication de réflecteurs de projecteurs pour autombiles sont choisis comme suit:

*A. Pour la peau:*

Utilsation d'homopoly(butylène téréphtalate) non chargé à nombre de viscosité compris entre 110 et 160 cm³/g.

*B. Pour le noyau:*

Le noyau est fabriqué en matière moulable comportant de 40 à 70% d'homopoly(butylène téréphtalate), jusqu'à 20% de fibres de verre moulues et de 30 à 50% d'hématite — pourcentage en poids. Le nombre de viscosité du polyester est situé dans un domaine compris entre 90 et 120 cm³/g.

Le diamètre des fibres de verre va généralement de 9 à 16 μm. Au moins la moitié des fibres de verre a une longueur de fibre < 200 μm.

*Exemples:*

1) Pour la peau est utilisé un homopoly(butylène téréphtalate ) à nombre de viscosité de 135 cm³/g.

2) Pour la fabrication de la matière moulable destinée au noyau est utilisé un homopoly(butylène téréphtalate) à nombre de viscosité de 115 cm³/g.

3) Sont utilisées comme matières de remplissage:

a. hématite: emploi d'un produit du commerce (densité: 4,9 g/cm³; surface spécifique: 0,312 m²/cm³; diamètre moyen des particules: 40 μm.

b. mica 1: emploi d'un produit du commerce (densité: 2,9 g/cm³; surface spésifique: 0,212 m²/cm³; diamètre moyen des particules: 82 μm.

b. mica 2: emploi d'un produit du commerce (densité: 2,9 g/cm³; surface spécifique: 0,755 m²/cm³; diamètre moyen des particules: 12 μm.

4) Les fibres de verre utilisées sont un produit du commerce de diamètre 10 μm et de longueur de fibre moyenne 110 μm.

*Fabrication de la matière moulable destinée au noyau:*

Dans un malaxeur à une vis et à action continue, pourvu de deux ouvertures de remplissage (température de cylindre: 240°C) est versé le présent homopoly(butylène téréphtalate) sous forme de granulés dans la première ouverture. Les matières de remplissage et les fibres de verre sont ajoutées après dosage dans la seconde ouverture. la matière moulable est sortie sous forme de jonc, refroidie et granulée. Les granulés sont séchés jusqu'à ce qu'ils atteignent une humidité résiduelle < 0,02%.

Le tableau annexé montre la réalisation de réflecteurs en des matières selon l'invention (exemples 1 et 2), c'est-à-dire chargées essentiellement avec de l'hématite (exemples 1 et 2) et, d'autre part, avec une des matières de la technique antérieure (mica).

Les réflecteurs ainsi fabriqué ont les dimensions suivantes:

— contour d'ouverture rectangulaire; largeur 220 mm; hauteur 116 mm;

— distance focale: 26,5 mm;

— épaisseur de paroi: 2,5 mm.

Ils sont réalisés par moulage par injection à deux composantes dans les conditions suivantes:

— *pour ce qui est de la peau:*
  · température: 240-270 °C
  · pression: 675 bars

— *pour ce qui est du noyau:*
  · température: 230-250°C
  · pression: 1000 bars.

Les réflecteurs ainsi fabriqués sont examinés sur le plan de la qualité dimensionnelle et de la stabilité en temperature:

— pour ce qui est de la qualité dimensionnelle, on examine, à la sortie du moule et après refroidissement du réflecteur, si le réflecteur comporte un vrillage, c'est-à-dire une torsion autour de son axe. Les résultats figurent au tableau annexé dans la colonne «bonne forme sans vrillage». On voit que pour les exemples 1 et 2 selon l'invention, quatre-vingt quatorze réflecteurs sur cent ne présentent aucun vrillage. Cette proportion descend à dix-sept et vingt-huit pour les réflecteurs A et B de référence;

— pour ce qui est de la stabilité en température, on équipe les projecteurs de lampes fonctionnant en éclairage de coupure. Au bout de 20 minutes de fonctionnement, on note (par observation sur un écran) l'abaissement de la limite de coupure entre l'état froid et l'état d'échauffement. Une telle méthode a été définie dans une norme de la Communauté Economique Européenne, dite GTB (Groupe de Travail de Bruxelles).

Le tableau annexé montre dans sa dernière colonne la variation de coupure GTB exprimée en pourcentages d'angles (valeurs de la tangente). On voit que pour les exemples 1 et 2 selon l'invention, la variation détectée est beaucoup plus faible que pour les réflecteurs de référence des examples A et B.

En definitive, on voit que l'utilisation de l'hématite en tant que charge, conformément à l'invention, améliore de façon nette la stabilité dimensionnelle et la tenue en température des projecteurs selon l'invention.

| Essai | Matière moulable pour le noyau | | | | | | Matière moulable pour la peau | Bonne forme sans vrillage | Variation de coupure G.T.B. |
|---|---|---|---|---|---|---|---|---|---|
| | Homo. (butylène téréphthalate) | | Matière de remplissage | | Fibres de verre | | Homo. (butylène téréphtalate) | | |
| N° | Nombre de viscosité (d.l. matière moulable) cm³/g | Quantité (% en poids) | | Quantité (% en poids) | | Quantité (% en poids) | Nombre de viscosité (cm³/g) | | |
| 1 | 110 | 50 | Hématite | 40 | Fibres moulues | 10 | 135 | 94% | + 0,05% |
| 2 | 108 | 40 | Hématite | 60 | Fibres moulues | 10 | 135 | 94% | + 0,04% |
| A | 104 | 60 | Mica 1 | 30 | Fibres moulues | 10 | 135 | 17% | + 0,08% |
| B | 105 | 60 | Mica 2 | 40 | Fibres moulues | 10 | 135 | 28% | + 0,08% |

## Revendications

1. Réflecteur de projecteur pour véhicule automobile fabriqué par moulage par injection selon le procédé à deux composants en poly(alkylène téréphtalate) à nombre de viscosité (DIN 16 779) situé entre 60 et 180 cm³/g, caractérisé par le fait que le noyau comporte de 15 à 75% en poids d'hématite, au moins 75% de l'hématite ayant une dimension particulaire inférieure à 70 µm.

2. Réflecteur de projecteur pour véhicule automobile selon la revendication 1, caractérisé par le fait que le noyau comporte de 30 à 60% en poids d'hématite.

3. Réflecteur de projecteur pour véhicule automobile selon l'une des revendications 1 et 2, caractérisé par le fait que la peau comporte jusqu'à 30% en poids de Ti O₂.

## Patentansprüche

1. Scheinwerferreflektoren für Kraftfahrzeuge, die im Spritzguss nach einem Verfahren mit zwei Bestandteilen aus Poly(alkylenterephtalat) mit einer Viskositätszahl (DIN 16779), die zwischen 60 und 180 cm³/g liegt, hergestellt werden, dadurch gekennzeichnet, dass der Kern 15 bis 75 Gew.-% Hämatit enthält, wobei mindestens 75% des Hämatit eine Teilchendimension unter 70 µm haben.

2. Scheinwerferreflektoren für Kraftfahrzeuge nach Anspruch 1, dadurch gekennzeichnet, dass der Kern 30 bis 60 Gew.-% Hämatit enthält.

3. Scheinwerferreflektoren für Kraftfahrzeuge nach einem der Ansprüche 1 oder 2, dadurch gekennzeichnet, dass die Haut bis zur 30 Gew.-% TiO₂ enthält.

## Claims

1. Headlamp reflector for an automobile vehicle manufactured by injection molding according to the process with two components of poly(alkylene terephthalate) having a viscosity number (DIN 16,779) of between 60 and 180 cm³/g, characterised in that the core comprises from 15 to 75% by weight of hermatite, at least 75% of the hematite having a particle size less than 70 µm.

2. Headlamp reflector for an automobile vehicle as claimed in claim 1, characterized in that the core comprises from 30 to 60% by weight of hematite.

3. Headlamp reflector for an automobile vehicle as claimed in one of claims 1 and 2, characterised in that the skin comprises up to 30% by weight of TiO₂.